(19) Europäisches Patentamt
European Patent Office
Office européen des brevets

(11) Numéro de publication: 0 214 034 B1

# (12) FASCICULE DE BREVET EUROPÉEN

(45) Date de publication du fascicule du brevet: 25.10.89

(51) Int. Cl.⁴: C 04 B 35/80

(21) Numéro de dépôt: 86401793.4

(22) Date de dépôt: 11.08.86

## (54) Procédé pour la fabrication d'une matière céramique frittée à filaments de renforcement.

(30) Priorité: 19.08.85 FR 8512503

(43) Date de publication de la demande: 11.03.87 Bulletin 87/11

(45) Mention de la délivrance du brevet: 25.10.89 Bulletin 89/43

(84) Etats contractants désignés: AT BE CH DE GB IT LI NL SE

(56) Documents cité:
EP-A-0 023 869
EP-A-0 067 584
GB-A-2 157 282
US-A-4 507 224

CHEMICAL ABSTRACTS, vol. 101, no. 10, septembre 1984, page 303, abrégé no. 77894r, Columbus, Ohio, US; & JP-A-59 54 677 (TATEHO CHEMICAL INDUSTRIES CO. LTD.) 29-03-1984
CHEMICAL ABSTRACTS, vol. 102, no. 20, mai 1985, page 302, abrégé no. 171408x, Columbus, Ohio, US; & JP-A-60 06 079 (MITSUBISHI METAL CORP.) 11-01-1985
AMERICAN CERAMIC SOCIETY BULLETIN, vol. 64, no. 2, février 1985, pages 298-304, Columbus, Ohio, US; G.C. WEI et al.: "Development of SiC-whisker-reinforced ceramics"

(73) Titulaire: AEROSPATIALE Société Nationale Industrielle, 37, Boulevard de Montmorency, F-75781 Paris Cédex 16 (FR)

(72) Inventeur: Debaig- Valade, Caroline, 18, Impasse Genesta, F-33200 Bordeaux (FR)
Inventeur: Parneix, Patrick, 69, rue de Kervenanec, F-56100 Lorient (FR)
Inventeur: Goursat, Paul, Haut Félix, F-87430 Verneuil/Vienne (FR)

(74) Mandataire: Bonnetat, Christian, Cabinet PROPI Conseils 23 rue de Léningrad, F-75008 Paris (FR)

EP 0 214 034 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne un procédé pour obtenir une matière céramique par frittage sous charge d'une poudre incorporant des filaments de renforcement.

On sait que les matières céramiques thermomécaniques présentent par rapport aux métaux de nombreux avantages, tels que légèreté, résistance mécanique élevée à haute température, inertie chimique et bons comportements aux frottements et à l'usure. A l'inverse, les céramiques massives ou monolithiques présentent les inconvénients d'être peu ductiles et d'avoir une faible résistance aux chocs thermiques et aux chocs mécaniques. Par ailleurs, on sait que les propriétés mécaniques de telles matières céramiques sont directement fonction de la densité de ces dernières.

Pour améliorer la tenacité et la résistance aux chocs thermiques et mécaniques de ces matières céramiques massives, on a déjà pensé à incorporer des fibres réfractaires de renforcement dans la matrice céramique. Pour cela, on introduit de telles fibres de renforcement dans la poudre à partir de laquelle ladite matière est obtenue par frittage.

Toutefois, un tel processus soulève de nombreuses difficultés:

a) les fibres de renforcement ont tendance à s'agglomérer et il est difficile de les disperser dans la poudre à fritter; le mélange poudre-fibres est difficilement homogène, de sorte qu'il en est de même de la céramique renforcée obtenue et de ses propriétés mécaniques et physiques; de plus, cette difficulté de dispersion des fibres dans la poudre empêche l'obtention d'une densité élevée pour ledit mélange, de sorte que les propriétés mécaniques de la matière céramique obtenue sont limitées.

b) pour tenter d'améliorer la densité, on opère généralement le frittage de la poudre réfractaire à une température élevée (supérieure à 1600°C), ce qui a deux conséquences:

1) endommagement thermique des fibres, qui perdent leur résistance mécanique et ne peuvent donc plus remplir leur office de renforcement;

2) accroissement des interactions chimiques aux interfaces entre les fibres et la matrice, ce qui agit dans le sens de la solidarisation entre les fibres et la matrice et donc dans le sens de la diminution de la résistance mécanique de la matière céramique.

c) également pour tenter d'augmenter la densité de la matière céramique, le frittage de la poudre nécessite l'application d'une pression élevée et il en résulte que les fibres de renforcement sont écrasées et/ou brisées par les grains de la poudre en cours de frittage et perdent leurs caractéristiques mécaniques.

Ainsi, dans ces processus connus, les deux moyens qui permettraient d'augmenter la densité, et donc les propriétés mécaniques, de la matière céramique - a savoir température et pression élevées - conduisent en réalité à une diminution de la résistance mécanique de la matière céramique.

La présente invention a pour objet de remédier à ces inconvénients et de réaliser une matière composite céramique/céramique frittée peu fragile, présentant une résistance élevée aux chocs thermiques et aux chocs mécaniques.

A cette fin, selon l'invention, le procédé pour l'obtention d'une matière céramique par frittage sous charge d'une poudre incorporant des filaments de renforcement, selon lequel on réalise le mélange intime d'une poudre de grains d'une solution solide à base de silicium, d'aluminium, d'oxygène et d'azote, et de filaments de renforcement en carbure de silicium et/ou en nitrure de silicium, est caractérisé en ce que lesdits filaments de renforcement ont une longueur au plus égale à 3000 µm et un diamètre au plus égal à 15 µm, en ce que la granulométrie de ladite poudre est micronique ou submicronique en fonction directe du diamètre desdits filaments de renforcement, et en ce que ledit mélange est fritté à une température comprise entre 1500°C et 1650°C et sous une pression de l'ordre de 40 MPa.

La solution solide (matrice) à base de silicium, d'aluminium, d'oxygène et d'azote est, dans la technique, généralement désignée sous le terme de "Sialon". Un tel Sialon est l'un de ceux répondant à la formule générale

$$Si_{6-x}Al_xO_xN_{8-x},$$

dans laquelle x est inférieur ou égal à 4,2. De préférence, on choisit le Sialon ayant pour formule

$$Si_{3,5}\,Al_{2,5}\,O_{2,5}\,N_{5,5}$$

Par ailleurs, lesdits filaments de renforcement peuvent être soit des fibres de carbure de silicium ayant une longueur comprise entre environ 100 et 3000 µm et un diamètre de l'ordre de 10 µm, soit de trichites de carbure ou de nitrure de silicium, éventuellement monocristallins (généralement désignés sous le terme de "whiskers" dans la technique), ayant une longueur comprise entre environ 10 et 300 µm, et un diamètre de l'ordre de 0,1 et 0,5 µm.

Avantageusement, la proportion pondérale de filaments de renforcement est au plus égale à 40 %.

On suppose, pour expliquer les propriétés

avantageuses (montrées ci-après) de la matière céramique selon l'invention, que l'on bénéficie des conditions favorables suivantes:

- tout d'abord, puisque les filaments de renforcement sont relativement courts, il est possible d'obtenir une dispersion satisfaisante desdits filaments et donc une bonne homogénéité du mélange poudre-filaments, ce qui favorise l'obtention d'une densité élevée. Le mélange peut être alors effectué par des moyens connus, comme il sera expliqué ci-après;
- la granulométrie de la poudre étant faible et adaptée au diamètre des filaments, ceux-ci ne sont pas endommagés lors de l'application de la pression de frittage et ils conservent donc leurs propriétés mécaniques;
- la granulométrie de la poudre étant faible, l'action de la pression de frittage est plus efficace, de sorte que cette pression peut être seulement de l'ordre de 40 MPa;
- de même, à cause de la faible granulométrie de la poudre, la température de frittage peut être comprise entre 1500°C et 1600°C, ce qui évite l'endommagement thermique des fibres de renforcement et les interactions chimiques aux interfaces entre les fibres et la matrice.

Pour abaisser encore la température et la pression de frittage, il est avantageux d'incorporer des adjuvants de densification dans une proportion au plus égale à 10 %.

On remarquera que le document CHEMICAL ABSTRACTS, vol. 102, no 20, Mai 1985, page 302, abrégé no 171 498 x, Colombus, Ohio, US divulgue un procédé pour l'obtention d'une matière céramique à partir d'un mélange d'une poudre de Sialon et d'un adjuvant de densification avec des filaments de renforcement en nitrure de silicium, ledit mélange étant fritté. Dans ce document antérieur, on ne trouve pas les conditions de frittage, les dimensions des filaments de renforcement et la granulométrie de la poudre, conformes à la présente invention et permettant de trouver un compromis entre ces différents paramètres opposés, afin d'obtenir une matière céramique présentant des propriétés mécaniques élevées.

Il en est de même du document CHEMICAL ABSTRACTS, vol 101, n° 10, Septembre 1984, page 303, abrégé n° 77694 r, Colombus, Ohio, US, dans lequel est décrite une matière céramique à base de Sialon, renforcée par des filaments en nitrure de silicium, par frittage sous pression. Les conditions de frittage peuvent être de 1700°C pour la température et 20 MPa pour la pression.

Par ailleurs, le document US-A-4 507 224 décrit une matière céramique contenant des filaments de renforcement ayant une longueur de 50 à 500 µm et un diamètre de 0,1 à 5 µm, la granulométrie de la poudre étant comprise entre 0,5 et 2 µm.

Les figures du dessin annexé feront bien comprendre comment l'invention peut être réalisée.

La figure 1 est une vue schématique d'un appareil de frittage.

Les figures 2 et 3 illustrent schématiquement, en vues de face tournées de 90° l'une par rapport à l'autre, une machine d'essai d'éprouvette en flexion à trois points.

La figure 4 donne des courbes illustrant la résistance à la flexion d'une matière céramique massive.

Les figures 5 et 6 donnent des courbes illustrant la résistance à la flexion de matières céramiques composites selon l'invention.

Les figures 7 et 8 donnent des courbes comparatives de comportement aux chocs thermiques de matières céramiques massives et de matières céramiques composites selon l'invention.

Pour réaliser la matière céramique composite conforme à la présente invention, on part d'une poudre de Sialon.

Plusieurs phases du système $Si_3 N_4$ $SiO_2$ $Al_2O_3$ AlN peuvent porter le nom de Sialon. Parfois, seule la phase β' de formule $Si_{6-x}Al_xO_xN_{8-x}$ (avec x inférieur ou égal à 4,2) porte ce nom.

Une telle poudre de Sialon peut être préparée par réaction de mélanges d'oxydes et de nitrures sous atmosphère contrôlée dans un domaine de température allant de 1600°C à 1800°C. Elle peut également être obtenue à partir de matières premières naturelles (kaolinite, pyrophillite) par carboréduction sous atmosphère d'azote. Pour des questions de coûts, il est avantageux d'utiliser un Sialon élaboré par carbonitruration, à environ 1450°C, de mélanges argile-alumine. Ce dernier Sialon présente une masse volumique de 3,27 g/cm³ et sa formule est:

$Si_{3,50}\ Al_{2,50}\ O_{2,50}\ N_{5,50}$

La poudre de Sialon utilisée est soumise à broyage et on ajuste la granulométrie de façon que, au moins approximativement et en moyenne, les grains de ladite poudre aient des dimensions de l'ordre du diamètre des filaments de renforcement utilisés. Par exemple, si l'on désire utiliser des filaments de renforcement constitués de fibres de carbure de silicium ayant un diamètre de l'ordre de 10 µm, on ajuste la granulométrie moyenne de la poudre de Sialon à une valeur voisine de 10 µm. En revanche, si l'on projette d'incorporer, à titre de filaments de renforcement, des trichites de carbure de silicium ou de nitrure de silicium ayant un diamètre d'environ 0,1 à 0,5 µm, on ajuste la granulométrie de la poudre de Sialon à une valeur de quelques dixièmes de microns.

Ces fibres de carbure de silicium ont par exemple une longueur comprise entre 100 et 3000 µm, alors que celle des trichites peut varier de 10 à 300 µm.

Les filaments de renforcement sont additionnés (dans une proportion maximale de 40 % en poids) à la poudre de Sialon de granulométrie correspondante et à des adjuvants de densification, tels que CaO, $Al_2O_3$, MgO, $Y_2O_3$, $ZrO_2$ ou des

oxydes de terres rares. Les propriétés de ces adjuvants, concernant la densification des matières frittées sous charge, sont bien connues. Dans le cadre de la présente invention, on utilise une proportion pondérale d'adjuvants de densification au plus égale à 10 %, et de préférence de l'ordre de 7 %.

Pour faciliter la désagglomération des filaments et obtenir un mélange poudre-filaments aussi homogène que possible, on peut utiliser différentes techniques connues, telles que la métallurgie des poudres et/ou la mise en oeuvre de résines thermoplastiques et de résines thermodurcissables.

De préférence, on mélange la poudre de Sialon, les adjuvants de densification et les filaments de renforcement dans un solvant polaire, tel que l'eau ou un alcool, et contenant un ou plusieurs agents dispersants, à l'aide d'un disperseur mécanique rotatif à grande vitesse. On peut par exemple utiliser un disperseur de marque "ULTRA-TURAX". La vitesse de rotation élevée (15000 tours par minute) de ce disperseur crée des turbulences très importantes, qui font disparaître les agglomérats de filaments et de grains de poudre. La bouillie ainsi obtenue peut ensuite être traitée par ultra-sons pour parfaire son homogénéisation, puis être brassée de nouveau énergiquement à l'aide du disperseur mécanique. La bouillie est alors filtrée sous vide, puis séchée, pour en éliminer les liquides et fournir des gâteaux de filtration destinés à être frittés sous charge. Eventuellement, ces gâteaux de filtration sont précompactés, par exemple par ultra-sons, avant frittage.

Pour réaliser un tel frittage, on utilise par exemple l'appareil montré par la figure 1. Cet appareil comporte essentiellement un moule 1 reposant sur un support 2, par exemple lui-même supporté par un contre-piston hydropneumatique 3, traversé par un piston hydropneumatique 4 susceptible de coopérer avec ledit contre-piston 3 et entouré par un dispositif de chauffage électrique à induction 5. Le moule 1 comporte une chemise intérieure de graphite 6 et le gâteau à fritter 7 est disposé à l'intérieur de ladite chemise. La pression du piston 4 et du contre-piston 3 est appliquée au gâteau 7 par l'intermédiaire de pastilles de graphite 8 et 9.

Après mise en place d'un gâteau 7 dans l'appareil de frittage, il est avantageux de commander le dispositif de chauffage 5 de façon que la température augmente rapidement jusqu'à environ 1250°C, après quoi on commande les piston et contre-piston 3 et 4 pour faire passer la pression de 0 à environ 40 MPa tout en augmentant la température jusqu'à une valeur de palier comprise entre 1500°C et 1650°C. La pression de 40 MPa et la température de palier sont appliquées pendant environ 1 heure, après quoi on procède au refroidissement de l'échantillon fritté, obtenu à partir du gâteau 7. Ce refroidissement s'effectue de façon libre ou programmée.

Afin de pouvoir faire des essais comparatifs, on fabrique avec l'appareil de la figure 1, et dans des conditions opératoires identiques pour tous, des échantillons:

- de matière céramique massive (sans filaments de renforcement mais avec adjuvants) à partir de poudre de Sialon de granulométrie micronique;
- de matière céramique massive (sans filaments de renforcement mais avec adjuvants) à partir de poudre de Sialon de granulométrie submicronique;
- de matière céramique/céramique composite selon l'invention, à partir de poudre de Sialon de granulométrie micronique contenant des fibres de renforcement de carbure de silicium (longueur comprise entre 100 et 3000 μm, diamètre de l'ordre de 10 μm) des adjuvants, la proportion pondérale des fibres étant choisie égale à 10 %, 30 % et 40 %; et
- de matière céramique/céramique composite selon l'invention, à partir de poudre de Sialon de granulométrie submicronique contenant des trichites de renforcement de carbure de silicium (longueur comprise entre 10 et 300 μm, diamètre de l'ordre de 0,1 à 0,5 μm) et des adjuvants, la proportion pondérale des trichites étant choisie égale à 30 %.

Ces différents échantillons se présentent sous la forme de disques de 100 mm de diamètre et de 5 mm d'épaisseur. Ils sont rectifiés et découpés à l'aide d'outils diamantés pour donner des éprouvettes de 4 mm x 4 mm x 30 mm, qui sont ensuite polies sur papier au carbure de silicium.

De plus, pour réaliser les essais comparatifs entre ces éprouvettes, on utilise la machine de flexion à trois points illustrée schématiquement sur les figures 2 et 3.

Cette machine comporte une partie inférieure fixe constituée d'un tube d'alumine 10 reposant sur une cellule de mesure d'effort (non représentée) et d'un plateau d'acier 11 supporté par ledit tube 10. Dans le plateau 11 sont ménagées deux rainures en V parallèles servant de logement partiel à des cylindres 12 et 13, servant d'appuis transversaux inférieurs à une éprouvette 14. La machine comporte de plus une partie supérieure mobile, destinée à transmettre la charge et constituée d'un tube d'alumine 15 et d'un plateau de compression 16. La partie mobile 15, 16 est animée par un mécanisme non représenté. Le plateau de compression 16 présente une rainure en V susceptible de servir de logement partiel à un cylindre 17, parallèle aux cylindres 12 et 13 et disposé à mi-distance de ceux-ci. Le cylindre 17 peut presser transversalement l'éprouvette 14, par la face supérieure de celle-ci.

Deux colonnes 18 et 19 servent à guider le coulissement relatif de la partie mobile par rapport à la partie fixe. Deux capteurs de déplacement 20 et 21, de même sensibilité et montés en opposition, prennent appui sur chacun des plateaux 11 et 16 et permettent d'enregistrer la déformation de l'éprouvette 14 à la compression, indépendamment des déformations de l'ensemble 10 - 13, 15 - 17. Un thermocouple 22 permet de réguler la température de l'éprouvette 14.

Pour bien mettre en évidence le rôle joué par les filaments de renforcement dans les matières composites selon l'invention, on a procédé à une première série d'essais comparatifs de résistance mécanique en flexion avec la matière céramique massive.

Des éprouvettes 14 de matière céramique monolithique à base de poudre de Sialon de granulométrie micronique sont soumises pendant 24 heures a une atmosphère oxydante, respectivement à des températures de 950°C, 1000°C et 1100°C. Après refroidissement lent, ces éprouvettes sont testées, à la température ambiante, en flexion trois points à l'aide de la machine des figures 2 et 3 (vitesse d'application de la charge égale à 0,08 mm par minute). On trace les courbes représentatives de la déformation $\underline{d}$ (en µm) des éprouvettes en fonction de l'effort $\overline{P}$ (en Newton) qui leur est appliqué (voir la figure 4).

Ces courbes montrent une rupture de type fragile (c'est-à-dire avec absence de déformation plastique préalable) jusqu'à 950°C. A partir de 1000°C, lorsqu'apparaît un petit domaine de déformation plastique, le module d'élasticité et la résistance mécanique chutent brutalement.

De façon semblable, des éprouvettes 14 de matière composite conforme à l'invention, à base de poudre de Sialon de granulométrie micronique et contenant 30 % en poids de fibres de carbure de silicium, sont soumises à une atmosphère oxydante pendant 24 heures, respectivement à des températures de 900°C, 925°C, 950°C et 1000°C. Après refroidissement lent, ces éprouvettes sont testées en flexion à trois points de façon identique à ce qui a été décrit ci-dessus pour la matière céramique monolithique. Les résultats son donnés par les courbes de la figure 5.

Celles-ci montrent que, jusqu'à 900°C, la matière composite de l'invention présente le même comportement que la matière céramique monolithique. Au-delà de 900°C, il apparaît un domaine de déformation plastique dont l'étendue augmente de façon importante avec la température. Ainsi, même après oxydation à température élevée, la matière composite selon l'invention, testée à température ambiante, possède une résistance mécanique variant selon son degré d'endommagement. Si l'on observe, par exemple au microscope électronique à balayage, le faciès de rupture d'une éprouvette de matière selon l'invention, on peut constater que la surface de fracture est très tourmentée. La rupture s'accompagne de nombreux déchaussements des fibres, ce qui ralentit considérablement la vitesse de fissuration. On peut en déduire que les fibres ne constituent pas une voie d'accès privilégiée pour l'oxygène et donc d'affaiblissement de la résistance mécanique, et que la réaction globale est régie par l'oxydation de la matrice.

D'autres éprouvettes 14, de matière composite conforme à l'invention, à base de poudre de Sialon de granulométrie submicronique et incorporant 30 % en poids de trichites de nitrure de silicium, sont soumises, pendant 24 heures, respectivement à des températures de 900°C, 950°C et 1000°C en atmosphère oxydante. Ces éprouvettes subissent des tests en flexion à trois points identiques à ceux décrits ci-dessus et dont les résultats sont illustrés par les courbes de la figure 6.

Là encore, on constate que la résistance mécanique de la matière composite selon l'invention est conservée et qu'il existe un domaine de déformation plastique avant rupture, quoique moins important que lorsque les filaments de renforcement sont des fibres plus longues et plus épaisses.

Par ailleurs, afin d'étudier la résistance aux chocs thermiques, on a procédé à une seconde série d'essais comparatifs. Pour ces essais, on trempe dans l'eau à 20°C des éprouvettes 14 préalablement portées à une température T. La mesure de la charge à la rupture en flexion C, mesurée par la machine des figures 2 et 3, d'une éprouvette 14 thermiquement choquée permet de connaître supporter sans être endommagée.

Sur les figures 7 et 8, on a représenté la variation du rapport de la charge à la rupture après trempe C à la charge à la rupture Co en absence de trempe, en fonction de cet écart de température $\Delta T$.

Sur la figure 7, la courbe 30 illustre, le comportement d'une matière céramique massive (sans filaments de renforcement) obtenue à partir d'une poudre de granulométrie micronique, alors que les courbes 31, 32, 33 concernent des matières céramiques composites correspondantes selon l'invention, respectivement pour des teneurs pondérales en fibres de carbure de silicium de 10 %, 30 % et 40 %.

La courbe 40 de la figure 8 a trait à une matière céramique massive obtenue à partir d'une poudre de granulométrie submicronique, la courbe 41 de cette même figure illustrant une matière céramique composite correspondante de l'invention, incorporant une proportion pondérale de 30 % de trichites de carbure de silicium.

Ces figures 7 et 8 montrent que l'incorporation de filaments de renforcement (fibres ou trichites) augmente sensiblement la résistance aux chocs thermiques d'une matière céramique frittée sous pression.

Ainsi, grâce à l'invention, on obtient des matières composites céramique/céramique à fibres aléatoires présentant des caractéristiques mécaniques améliorées par rapport aux matières monolithiques de même nature. En particulier, les matières selon l'invention, présentent un domaine plastique à haute température et une bonne résistance aux chocs thermiques. De plus, le procédé conforme à l'invention permet d'obtenir des matières homogènes et de microstructure contrôlée. Le rapport entre la taille des grains de la matrice et celle des fibres étant variable, l'invention permet de préparer des pièces de densité ajustable en fonction de l'application envisagée.

L'utilisation de la technologie de la métallurgie des poudres pour l'élaboration des matières composites selon l'invention assure une mise en oeuvre industrielle permettant des applications aéronautiques, automobiles ou spatiales.

Dans ces conditions, les matières céramiques selon l'invention sont particulièrement appropriées à être utilisées en substitution aux métaux réfractaires, par exemple pour la réalisation de pièces de moteurs (diesel, turbomachines, propulseurs, etc...), de blindages contre les projectiles, de pièces de frottement, d'outils de coupe et de forage, etc...

**Revendications**

1. Procédé pour l'obtention d'une matière céramique par frittage sous charge d'une poudre incorporant des filaments de renforcement, selon lequel on réalise le mélange intime d'une poudre de grains d'une solution solide à base de silicium, d'aluminium, d'oxygène et d'azote, et de filaments de renforcement en carbure de silicium et/ou en nitrure de silicium,
caractérisé en ce que lesdits filaments de renforcement ont une longueur au plus égale à 3000 µm et un diamètre au plus égal à 15 µm, en ce que la granulométrie de ladite poudre est micronique ou submicronique en fonction directe du diamètre desdits filaments de renforcement, et en ce que ledit mélange est fritté à une température comprise entre 1500°C et 1650°C et sous une pression de l'ordre de 40 MPa.

2. Procédé selon la revendication 1,
caractérisé en ce que la température et la pression maximales de frittage sont maintenues pendant environ 1 heure.

3. Procédé selon l'une des revendications 1 ou 2,
caractérisé en ce que ladite solution solide répond à la formule

$Si_{3,50}\,Al_{2,50}\,O_{2,50}\,N_{5,50}$.

4. Procédé selon l'une des revendications 1 à 3,
caractérisé en ce que lesdits filaments de renforcement sont des fibres de carbure de silicium ayant une longueur comprise entre 100 et 3000 µm et un diamètre de l'ordre de 10 µm.

5. Procédé selon l'une des revendications 1 à 3,
caractérisé en ce que lesdits filaments de renforcement sont des trichites de carbure de silicium ou de nitrure de silicium ayant une longueur de 10 à 300 µm et un diamètre de l'ordre de 0,1 à 0,5 µm.

6. Procédé selon l'une quelconque des revendications 1 à 6,
caractérisé en ce que la proportion pondérale de filaments de renforcement est au plus égale à 40 %.

7. Procédé selon l'une quelconque des revendications 1 à 6,
caractérisé en ce que ledit mélange intime incorpore des adjuvants de densification dans une proportion pondérale au plus égale à 10 %.

**Patentansprüche**

1. Verfahren zur Herstellung eines keramischen Materials durch Drucksintern eines Pulvers, welches Verstärkungsfasern inkorporiert, gemäß welchem das innige Gemisch eines Körnerpulvers einer festen Lösung auf Silizium- , Aluminium-, Sauerstoff- und Stickstoffbasis, und von Verstärkungsfasern aus Siliziumkarbid und/oder aus Siliziumnitrid hergestellt wird, dadurch gekennzeichnet, daß die genannten Verstärkungsfasern eine Länge von höchstens gleich 3000 µm und einen Durchmesser von höchstens gleich 15 µm aufweisen, daß die Granulometrie des besagten Pulvers mikronisch oder submikronisch in direkter Abhängigkeit vom Durchmesser der genannten Verstärkungsfasern ist und daß das genannte Gemisch bei einer Temperatur zwischen 1500°C und 1650°C und unter einem Druck in der Größenordnung von 40 MPa gesintert wird.

2. Verfahren nach Anspruch 1, dadurch gekennzeichnet, daß die Maximaltemperatur und der Maximaldruck beim Sintern während annähernd einer Stunde aufrechterhalten werden.

3. Verfahren nach einem der Ansprüche 1 oder 2, dadurch gekennzeichnet daß die genannte feste Lösung der Formel

$Si_{3,50}\,Al_{2,50}\,O_{2,50}\,N_{5,50}$

entspricht.

4. Verfahren nach einem der Ansprüche 1 bis 3, dadurch gekennzeichnet, daß die genannten Verstärkungsfasern Fasern aus Siliziumkarbid sind, welche eine Länge zwischen 100 und 3000 µm und einen Durchmesser in der Größenordnung von 10 µm aufweisen.

5. Verfahren nach einem der Ansprüche 1 bis 3, dadurch gekennzeichnet, daß die genannten Verstärkungsfasern Trichite aus Siliziumkarbid oder Siliziumnitrid sind, welche eine Länge von 10 bis 300 µm und einen Durchmesser in der Größenordnung von 0,1 bis 0,5 µm aufweisen.

6. Verfahren nach einem der Ansprüche 1 bis 5, dadurch gekennzeichnet, daß das gewichtsanalytische Verhältnis der Verstärkungsfasern höchstens gleich 40 % ist.

7. Verfahren nach einem der Ansprüche 1 bis 6, dadurch gekennzeichnet, daß das genannte innige Gemisch Verdichtungshilfsmittel in einem gewichtsanalytischen Verhältnis von höchstens gleich 10 % einschließt.

**Claims**

1. Method of making a ceramic material by sintering under load of a powder comprising

reinforcing fibres, wherein the intimate mixing of a grain powder of a solid solution of silicon, aluminum, oxygen and nitrogen, and of reinforcing fibres of silicon carbide and/or silicon nitride is made, characterized in that said reinforcing fibres have a length at most equal to 3000 µm and a diameter at most equal to 15 µm, in that the particle size of said powder is micronic or submicronic directly depending on the diameter of said reinforcing fibres, and in that said blend is sintered at a temperature between 1500°C and 1650°C and under a pressure of about 40 MPa.

2. Method according to claim 1,
characterized in that the maximum temperature and pressure are held for about one hour.

3. Method according to one of claims 1 or 2,
characterized in that said solid solution has the following formula:

$Si_{3,50}\,Al_{2,50}\,O_{2,50}\,N_{5,50}$.

4. Method according to one of claims 1 to 3,
characterized in that said reinforcing fibres are silicon carbide fibres having a length between 100 and 3000 µm and a diameter of about 10 µm.

5. Method according to one of claims 1 to 3,
characterized in that said reinforcing fibres are silicon carbide or silicon nitride trichites having a length between 10 and 300 µm and a diameter of about 0,1 to 0, 5 µm.

6. Method according to any one of claims 1 to 5,
characterized in that the weight ratio of reinforcing fibres is at most equal to 40 %.

7. Method according to any one of claims 1 to 6,
characterized in that said intimate mixing comprises densifying adjuvants in a weight ratio at most equal to 10 %.

Fig: 1

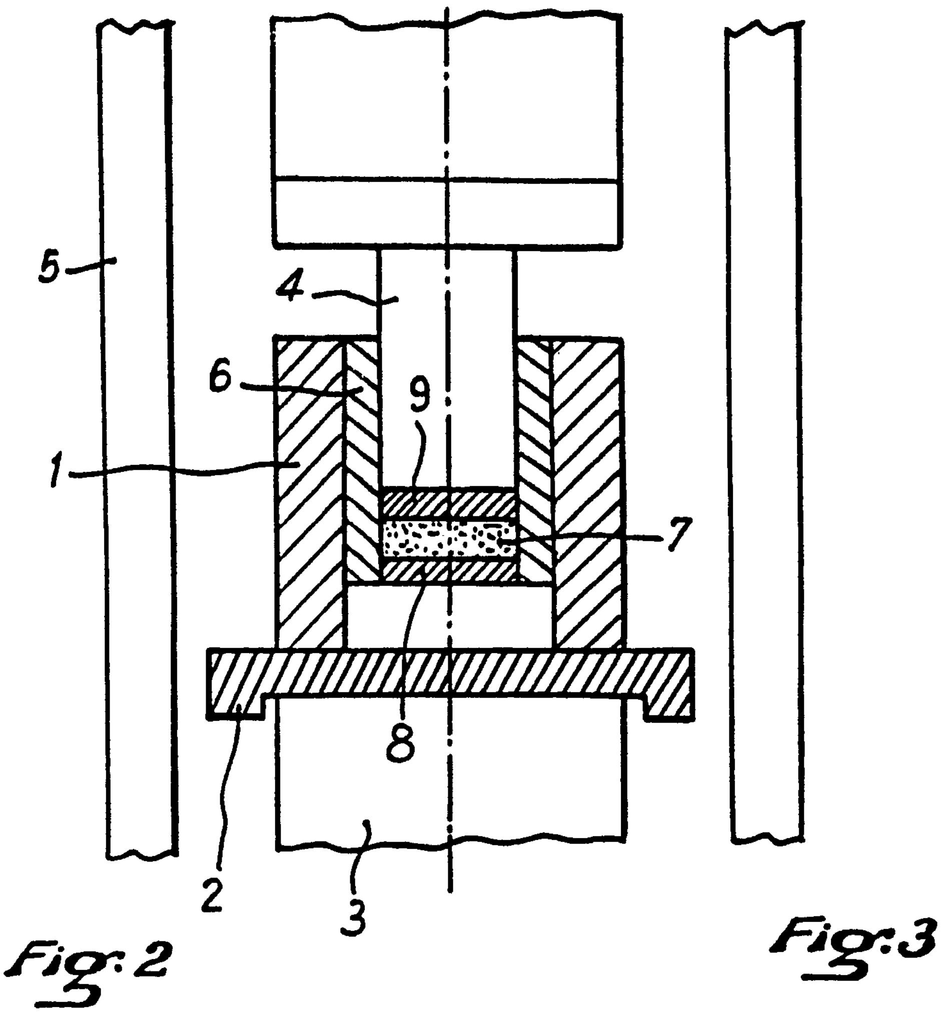


Fig: 2

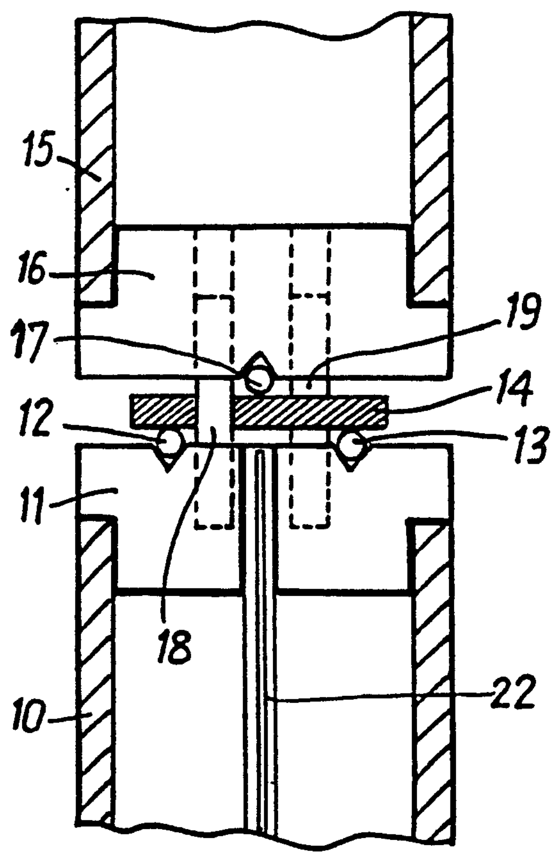


Fig: 3

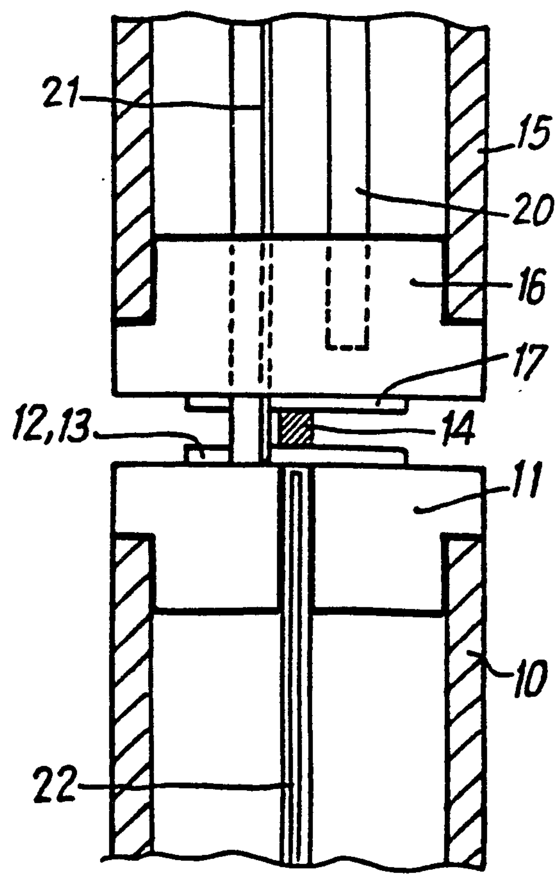

Fig. 6

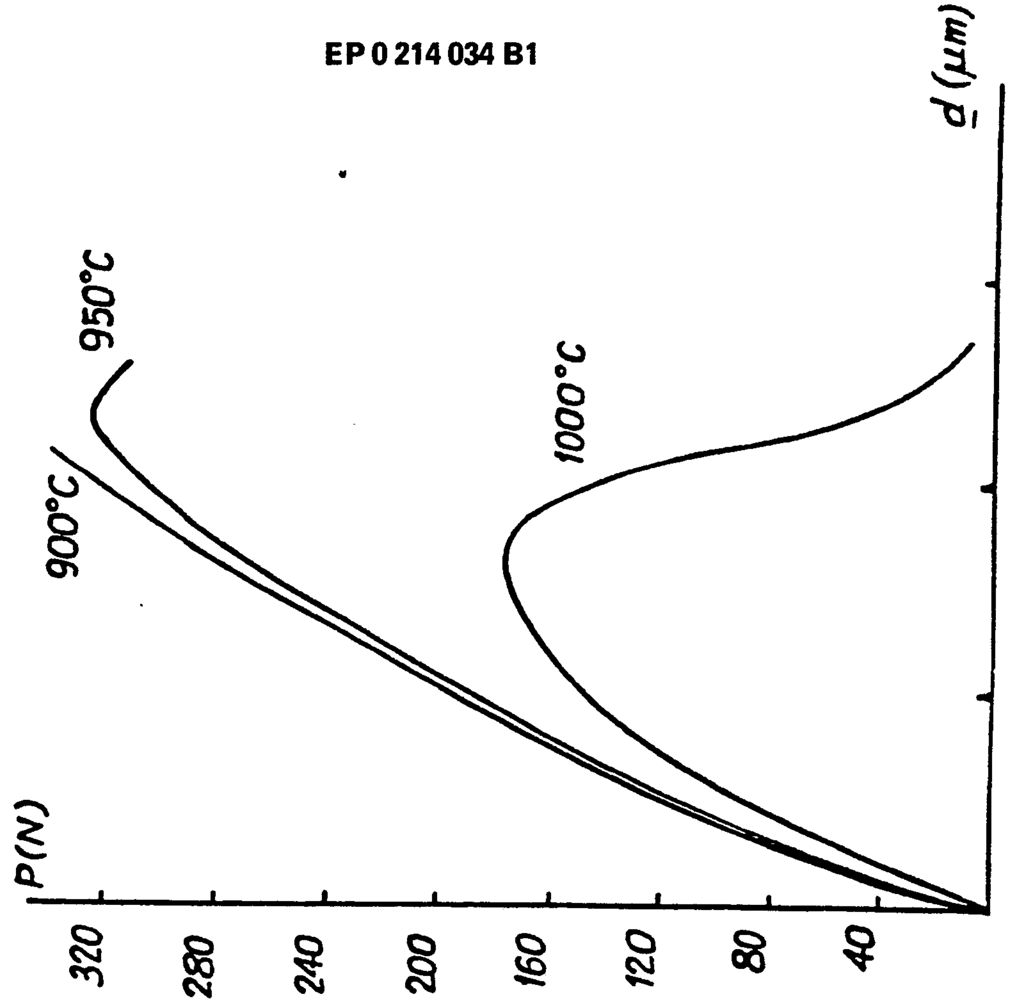
d (µm)
P(N)
320
280
240
200
160
120
80
40
100
200
300
900°C
950°C
1000°C

Fig. 4

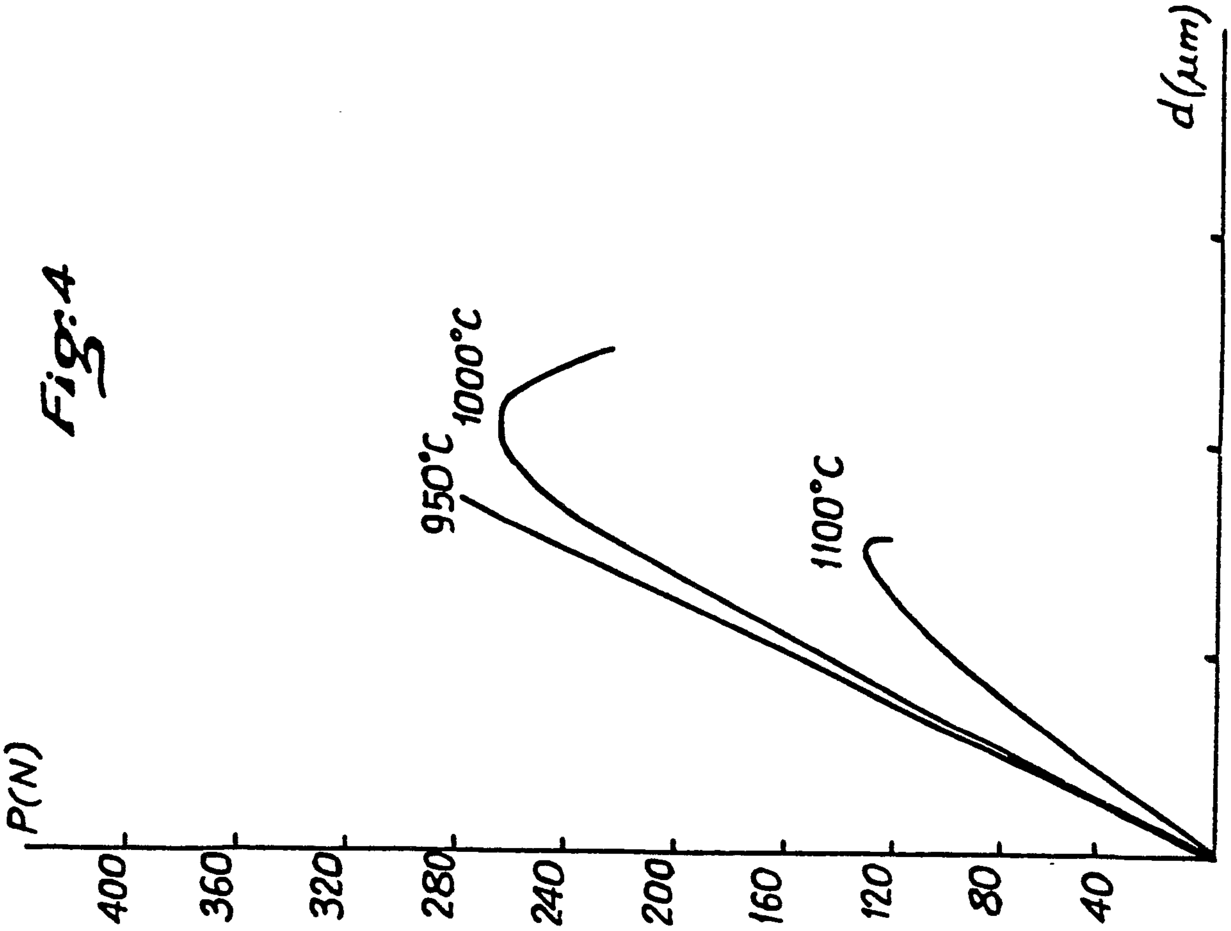
d (µm)
P(N)
400
360
320
280
240
200
160
120
80
40
100
200
300
950°C
1000°C
1100°C

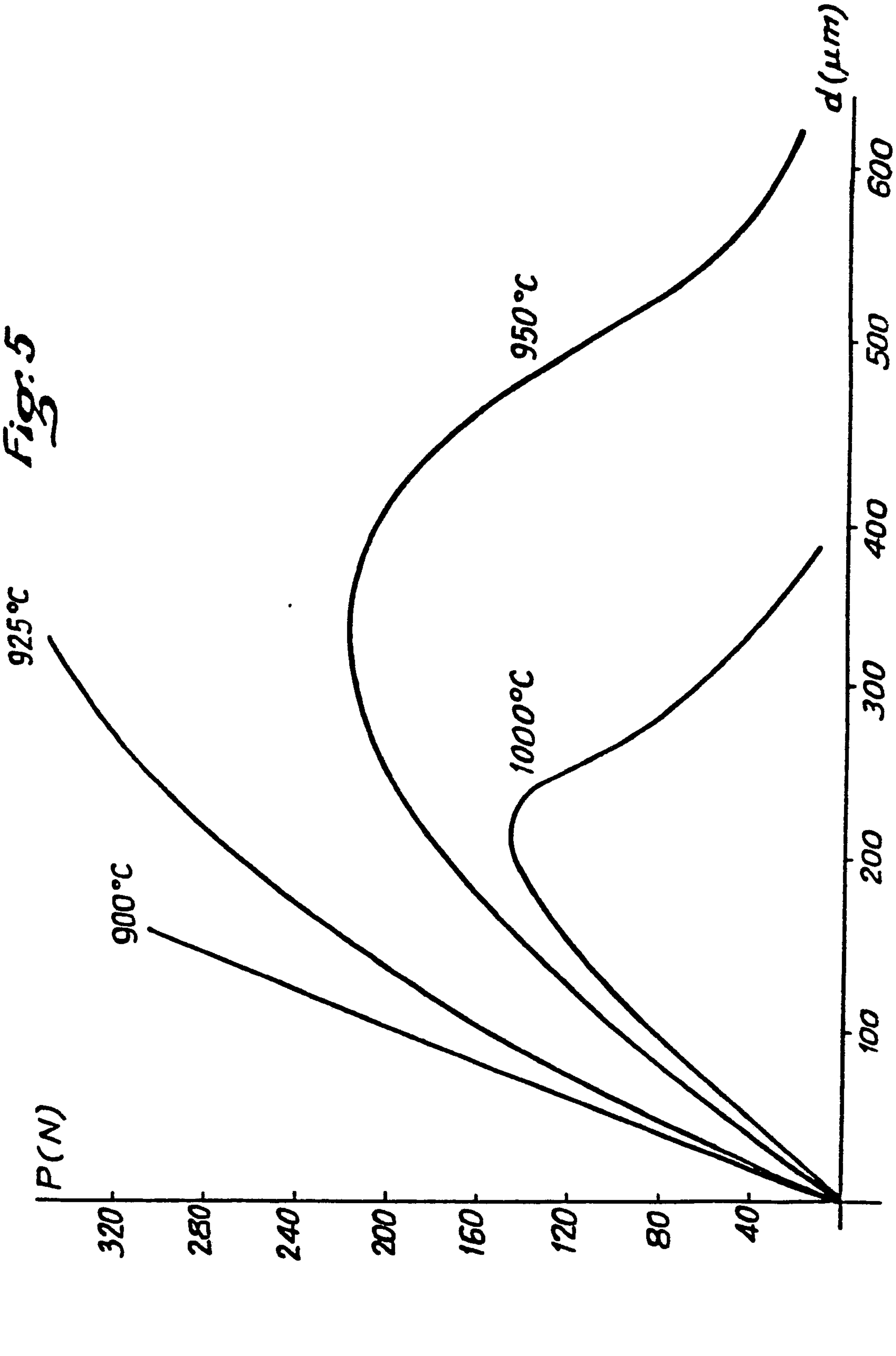
P (N)
d (μm)
320
280
240
200
160
120
80
40
100
200
300
400
500
600
900°C
925°C
950°C
1000°C

Fig: 5

Fig: 7

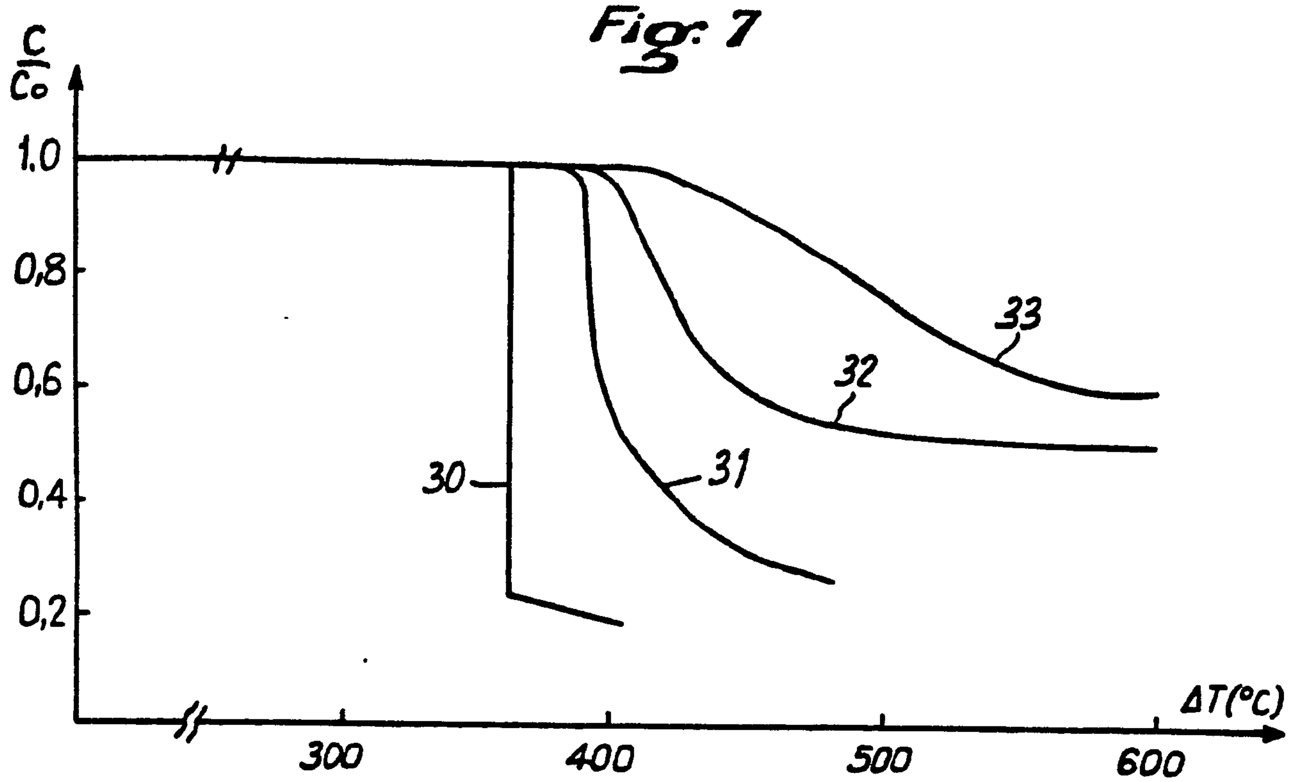
C/Co
1.0
0,8
0,6
0,4
0,2
30
31
32
33
ΔT(°C)
300
400
500
600

Fig: 8

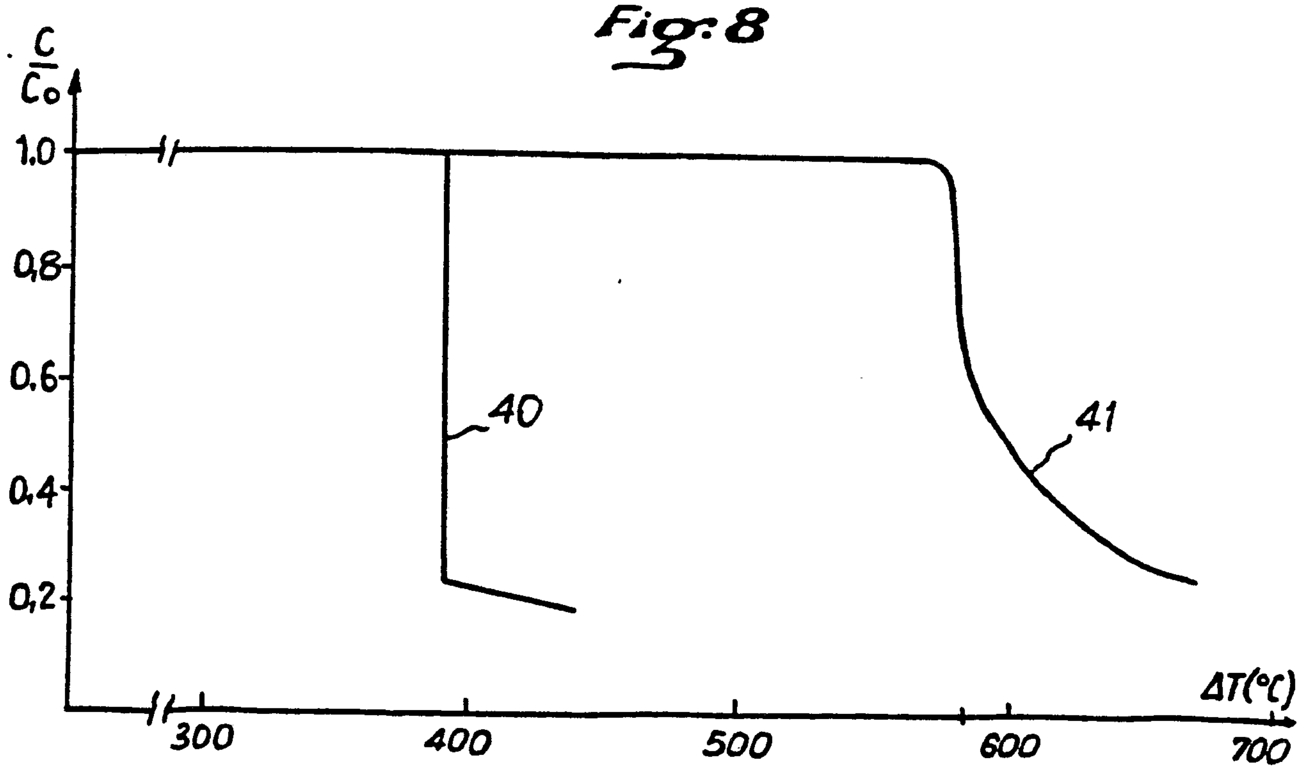
C/Co
1.0
0,8
0,6
0,4
0,2
40
41
ΔT(°C)
300
400
500
600
700